Europäisches Patentamt

**European Patent Office**

**Office européen des brevets**

(19)

(11) Publication number: **0 051 711**
A1

(12) **EUROPEAN PATENT APPLICATION**

(21) Application number: **80830094.1**

(22) Date of filing: **06.11.80**

(51) Int. Cl.³: **B 60 L 11/18,** H 02 K 53/00

(43) Date of publication of application: **19.05.82**
**Bulletin 82/20**

(84) Designated Contracting States: **AT BE CH DE FR GB LI LU NL SE**

(71) Applicant: **Eustachio, Guardiani, Via Della Corte, 6, I-65028 Tocco Casauria Pescara (IT)**

(72) Inventor: **Eustachio, Guardiani, Via Della Corte, 6, I-65028 Tocco Casauria Pescara (IT)**

(54) Cars and all means of transport with an electromotor, equipped with alternators incorporated or connected to the wheels or driving axles for the quick and continue recharge of batteries, or supplying of electric energy directly.

(57) Cars and all means of transport with an electromotor, equipped with alternators incorporated or connected to the wheels or driving axles for the quick and continue recharge of batteries or of electric mergg supplying directly from the alternator, to the electromotor and to the electrical equipment of the mean of transport, (the) alternators can be either traditional with electric energy tap at the side of the casing that is at the box of hold fast, or those with special functions that is the stator becomes the rotor as it is supplied with an electric inductor revolving magnet, while the rotor is transformed into a stator as it is supplied with a copper winding round an iron ring and at the axle of the alternator is made a spline in which the electric wire will go along under the bearing of the alternator from the electric energy taps of the two alternators, we are talking about the electric energy will pass by an electric wire to the regenerator, then to batterie and at last to the electromotor.

Eustacchio Guardiani

Via Della Corte, 6

65100 TOCCO CASAURIA (PE)

ITALY

Cars and all means of transport with an electromotor, equipped xwith alternators incorporated or connected to the wheels or driving axles for the quick and continue recharge of batteries, or supplying of electric energy directly.

The invention deals about cars and means of transport with alternators incorporated or connected to the wheels or driving axles for the quick and continue recharge of batteries or electric energy suppliyng directly.

We know already electric cars and means of transport in circulation with a limited range, about eighthy kilometres, they are in any case limited to have little journeys, the use of electric means of transport permits not only to economize the petrol, but it makes also possible the way to eliminate its use entirely·

These means of transport are required for va riaus reasons and in some cases for economic rea sons, but they never permit to have long journeys.

The purpose of the present invention is that of proposing alternators incorporated or connected to wheels or driving axles which allow the conti nue supplying of electric energy to one or more rigenerators at rapid action (an hour to recharge batteries), with a remarkable possibility to keep batteries continually charged.

The invention solves this purpose realizing cars and means of transport with alternators incorporated to the wheel or connected to the wheels or driving ax les. Wheels and driving axles are furnished with special particulars act to rea lize the reality of tomorrow in all the means of transport.

In conformity with the invention, we have qui cker and easier realization in the case of an ele ctric car, the alternators incorporated to wheels or in any case connected to them, as the free-whe els (not the motor-wheels), turn round the fixed shapt supplied with ball bearings which allow the wheels to turn round, consequeutly also the stator of the alternator will turn.

To avoid any kind of problem, it is sufficient to invert the functions, at the stator is put the copper winding which is usually put round the rotor, and in this case the stator would become the rotor, and at the rotor is put the winding which is usually put round the stator of the normal alternator, and also in this case the rotor would chauge its function that is, it would become the stator of the alternator in conformity of the invention.

The alternatos incorporated to wheels present, according to variaus cases, a shaping unlike traditional, that is it can be very high and in the same time it can be narrow so that it can be applied to a bicycle or other means of transport.

The axle of the stator (en rotor) presents a visible hole or spline, it goes from the inside to the outsiie of the axle of the alternator so that the electric wire can pass through that space obtained under the bearing of the alternator and the wheel, and in this case we have the going out of the electric energy, in this case it is connected to another electric wire connected to a rigenerator at rapid tap which always remains connected to the battery so that all the produ-cted electric energy can be utilized.

The wheels with incorporated alternator are put and fixed the wheels of the common bicycle or motor-bicycle.

The alternators connected to wheels in conformity of the invention are realized in cylindrical shape so that they can be applied and fixed to the various means of transport with the various applications in which wheels are fixed today, but in this case we obtain the necessary space so that we can put the altenator. Also in this case we have a spline at the axle of the alternator which pass under the bearing of the alternator and the same wheel, so in this case the bearing, has two functions, it makes the alternator and the wheel turn.

While, in the case of the bicycle, the going out of the electric wire is free at the two sides of the axle, in this caseitis compulsory to make it pass from the autsider part of the axle, to which it will be connect another electric wire which will take it to the rigenerator or more rapid rigenerators to which the batteries are always connected. So the more the mean of transport runs the more electric energy it produces.

In conformity of the invention in the case that the alternator is put on and fixed on the mean of transport, in this case the alternator is one of those common and function are normal, the rotor is put in motion through driving-belts, chains etc-putting pulleys to the axle of the rotor and to the wheel, or to the axle whil makes the wheel turn.

In this case the electric wire is applied to the hold fast which are inside a box obtained at the side of the casing of the alternator, and then it will be linked to the rigenerator to which are connected batteries; or a direct use can be done an the motor and in some cases it can be send to the power station .

It is not necessary to say that the mean of transport moving makes the wheels turn and these last make the alternators turn and so we have many moving power stations.

Another application is given from the invention and realized in such such a manner that itis possible to apply the alternators to the height of axles or axle stahts, indeed the axle would be even incorporated or connected to the alterna tors, so that when the motor will put in motion the mean of transport, the axles must turn, and as the axles are connected to the same alternator the motion of the mean of transport will put automatically in function the alternator, which al so in this case is are of those common with normal functions, producing electric energy. The electric wire is connected to the hold fasts of the alternator connected then to a rigenerator and this to batteries.   .

If the electromotor goes at battery, it has a linking with an electric wire goes from the battery to the electromotor, if indeed it is directly connected from an electric line, this is directly norished by a power station.

In this case the (electric) energy produced by the mean of transport goes directy to the power station.

Another solution can be that of applying the alternator near the motor and in any case hooked to the turning mechanismo which thanks to their motion allow the alternator to produce electric energy.

The advantages enabled by the invention consist essentially of the possibility of realizing a real source of electric energy, exclusively serving of the motion of wheels or axles of the means of transport to which are connected or directly incorporated alternators. Besides, every planner can, at his pleasure, take care of aesthetics of the wheels to which are incorporated alternators, also respecting the technique of structures of wheels and alternators.

The object of the invention is now illustrated in the enclosed drawings at exemplifying and not restrictive title. Figures shaw.

Fig. I and 2    a view from the top of some types alternators deprived of casing and with a part of the armature in the fig. n. I and in the fig. n. 2 with a removed part of the special inductor revolving magnet.

Fig. 3    a perspective view of an alternator with the rotor, ihat in normal alternators stretches out of the casing, but in this special case the rotor becomes stator as the inductor revolving magnet is replaced by the fixed annature and it has a winding round an iron ring, the cylindrical shape of the casing of the alternator is adduced in order to apply and fix the wheel of a me mean of transport.

Fig. 4    a general view of the stator of normal alternators which when its necessary it can become rotor with the replacenneut of the fixed armature, which has a winding round und an iron ring, with an inductor revolving magnet; front and poste rior covers have been moved in or der to see them better.

Fig. 5    shows the rotor which can become stator replacing the inductor revolving magnet with the fixed armature which has a copper winding round an iron ring.

Fig. 6    shows the complete alternator with part of the casing and front and posterior covers removed.

Fig. 7    the posterior section of a car wi th the rest removed, provided with an alternator with particular details in order to fix it on the car and then to bolt the wheel.

This alternator has special functions that is the rotor becomes stator becomes stator and the stator becomes rotor.

Fig. 8      ohows a wheel which is the wheel which then is boltey ed on the car.

Fig. 9      shows a wheel with incorporated alternator, this wheel can be applied to every mean of transport.

Fig. I0      a side view of a train, with engine and some cars, to one of these last the posterior part of the casingis removed and we can see an alternator on thecoach of the train. The alternator is provided with pulleys either at the alternator or at the side part of the wheel, to this last it is put a chain belt, so that when the wheel turnus it puts in motion the alternator.

Fig. II and I3      a view from the top of some means

- I2 -

of transport in conformity of the invention.

Fig. I2     the side view of a mean of transport with a part of coachwork removed where we can see an alternator pro vided with pulley, belt or chain connected to the pulley of the axle or of the wheel, it is always in the side part of the wheel.

Fig. I4     a rim of a car not supplied of ty re.

Fig. I5     a view of a bicycle provided with wheels with incorporated alternator with battery and electromotor.

Fig. I6     a view of a part of a wheel cut in the central part, with an empty spa ce where the alternator of a mean of transport is canalired in confor mity of  the invention.

In the fig. n.I is represented an alternator without casing and with a part of the stator 8 B removed, it is a common generator of the bicycle, where it is an inductor revolving magnet 1, while the armature is fixed and has a copper winding round an iron ring 8.

The motion of the rotor 1 produces a chian of variations of the flux connected to the winding, of which comes out an induced F.L.M. variable of intensity and direction ( Law Newman and Felice) the wire 5 goes to the lamp, and the wire 5b goes earth.

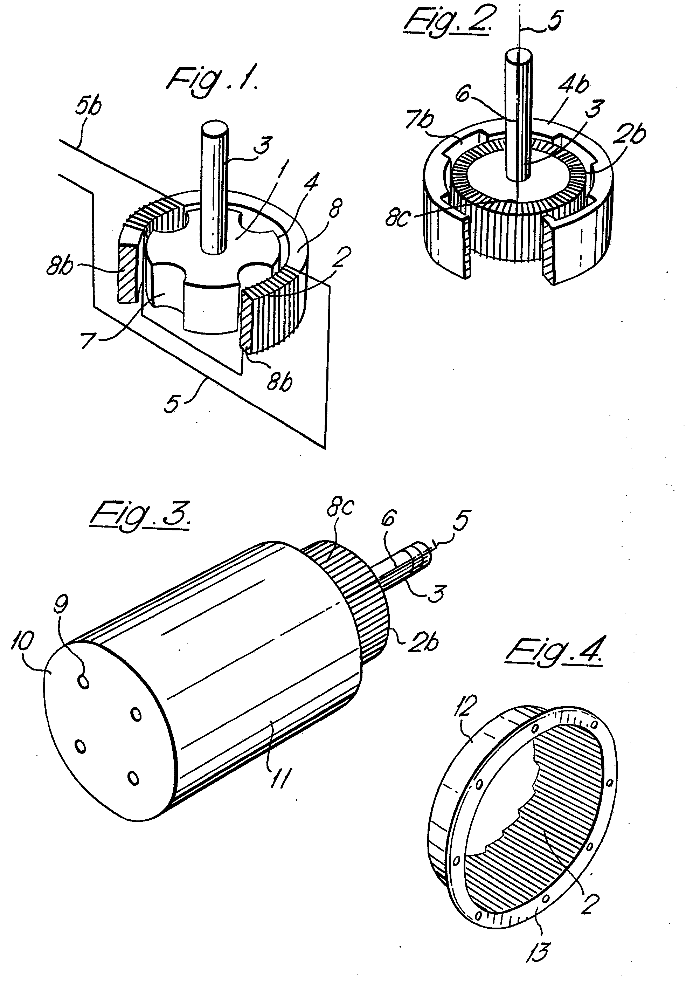

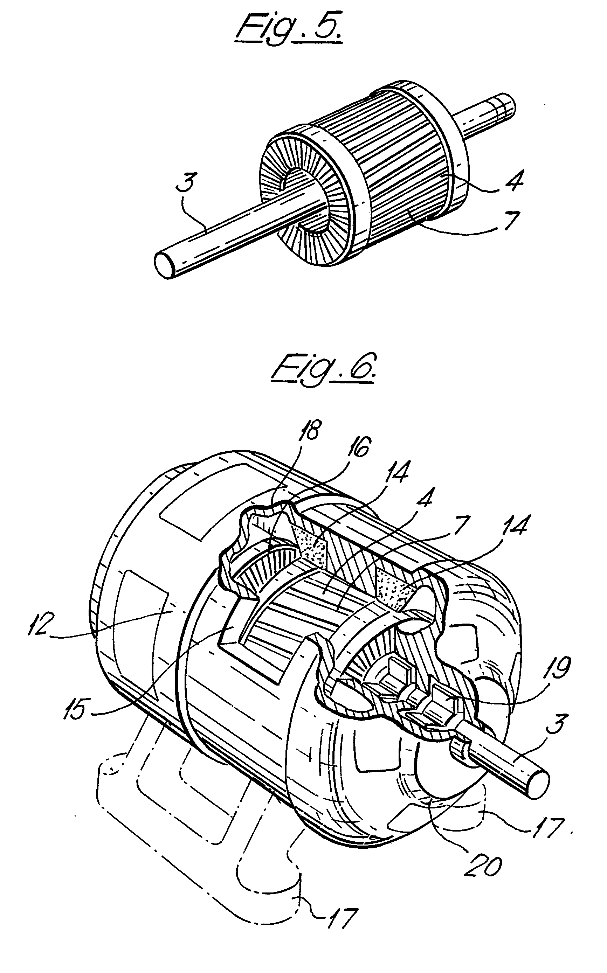

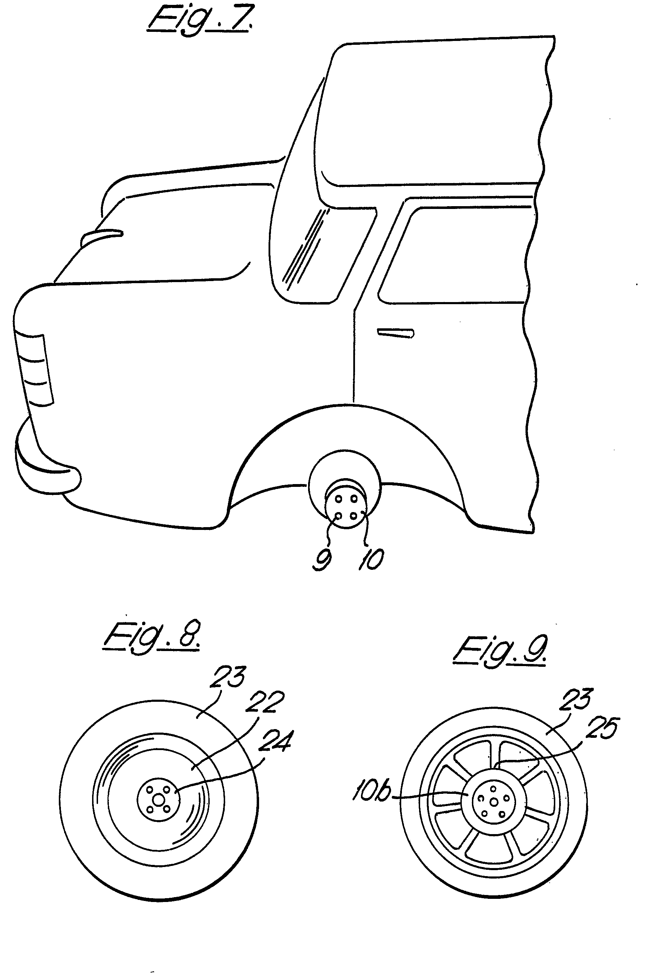

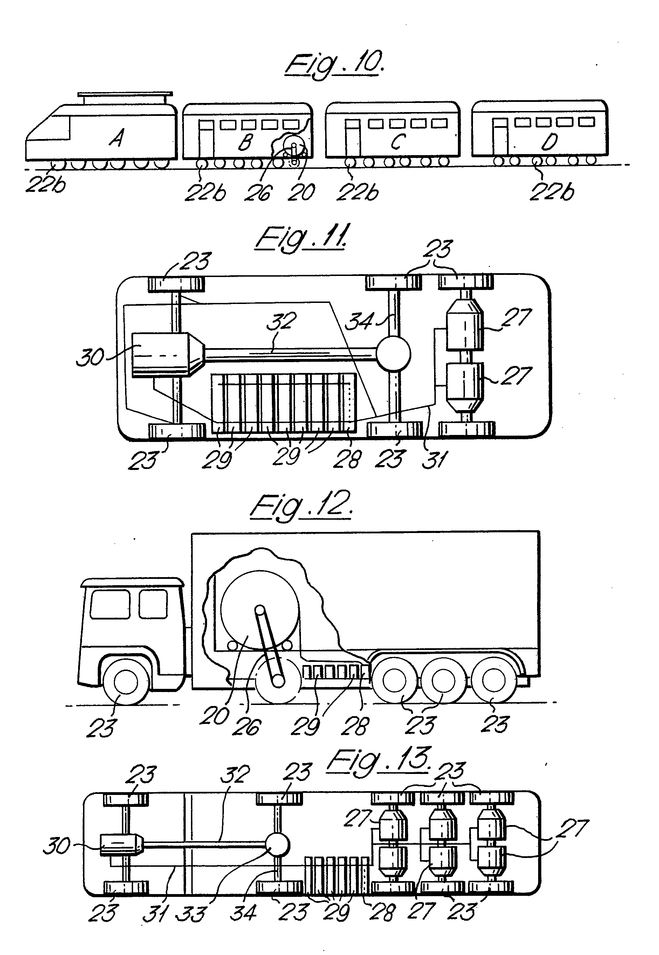

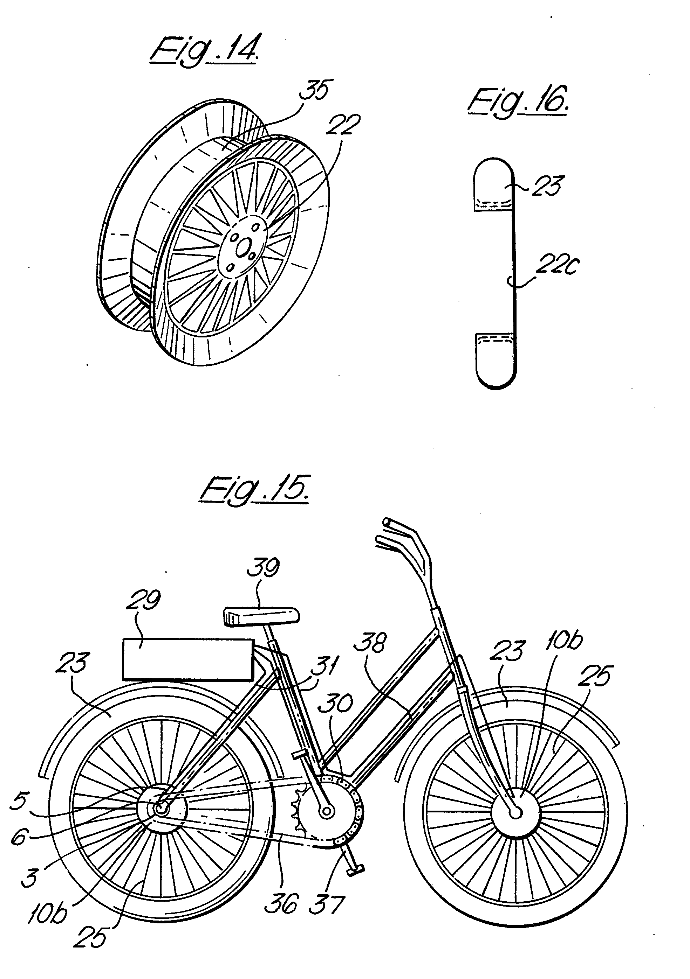

Fig. 2 shows another alternator, it is the same in the fig. 1, but in this case the working is changed, that is the rotor 1 is transformed into a stator 2b, as the rotor 1 is equipped with the fixed armature which has a copper winding round an iron ring 2b while the stator, where we can see the splines 7b, or poles 4b of the inductor revolving magnet assumes the functions of the rotor.

Fig. 3 shows an alternator in conformity of the invention and described about its working in the fig. 2, the casing of the alternator is built in a special manner , as when it is put and fixed on a mean of transport, the front part of the

casing I0 is provided wlth holes or bolts 9 where the wheel will be fixed by boltsor nuts, while in the posterior part we can note a portion ofthe stator $^{2b}$, that is the rotor which has the functions of a stator, we can see the spline 6 where the electric wire 5 will pass under the bearing I9.

Fig. 4 showsthe stator of an alternator with copper winding around an iron ring 2 provided with casing I2 whitout front and posterior covers I3 of the casing.

Fig. 5 shows an inductor revolving magnet 3, complete of an alternator.

Fig. 6 shows the alternator with part of external protection with function of covering this part is called casing I2, and part of the stator with copper winding round an iron ring 2 removed, this is one of the great industrial alternators, the inductor 4 is not a simple permanent magnet, like in the little generator of the bicycle, but a potent electro-magnet provided with many poles 4, as many as are necessary in connection to the power of the alternator. The electric energy for its working must be constant either for intensity or for direction, and so it is producted by a spe cial stimulating dynamo.

As for the inductor 2, it is a big iron rol led ring 8 inside which, in specil splines 7 .. is put the circuit of wire or of isolated copper rods2

Fig. 7 shows the posterior part 22 of a car with the front part removed, we can cee the spe-cial casing IO of the alternator already rised and fixed an the car, the casing of the alternator IO rised on the car points out the holes 9 to which the wheel will be bolted.

Fig. 8 shows a whell provided with rim 22, with tyre 23 and with holes 24 to which the wheel will be bolted.

Fig. 9 shows a wheel with incorporated alter nator, we can see the tyre 23 and the spokes, besides we can see the axle 3 of the alternator and of the wheel itself in order tofix the wheel on a bicycle, motorbicycle etc...

Fig. IO shows an engine A with wagons B, C, D, attached the engine, in the wagon B of which a p part of coachwork has been removed, we can see the alternator 20 with the pulley connected by belt or chain to the inside part of the wheel or the axle where there is another pulley, so while the train is trawelling it will produce electric energy like a movable power station.

We can utilize the electric energy either x sending it to the generator an order to recharge batteries, or sending it to the electromotor and to the installation of lighting of the train, we can also send it to the power station plared in the territory where the train is trawelling.

Fig. II and I3 show a mean of trasport cabin and caisson have been removed, they also show al ternators[27] incorporated or connected to axles, in this case the alternators are of the normal kind with normal functions when the mean of transport sin motion the alternators will turn and produce electric energy.

. The quicher the means of transport are the more electric energy they produce.

The electric energy produced by alternators will go by electric wires 3I to rapid generators and from these by an electric wire 3I to batte ries 29 and then from these last, always by an electric wire 3I , to the electro-motor.-

In this way every energy is recovered, inde ed in this case the electric energy of batteries will be renewed continually, which is not a little thing.

Fig. I2 shows a larry with a part of casing removed we can see the alternators 20 with beltor chain 26 which goes from the pulley of the engine to the pulley of the wheel or axle 1.

So, when the lorry is in motion, it will put in motion the alternator which will produce electric energy that by an electric wire 3I will go to rapid generators, 28 and from these, always by an electric wire 3I to batteries and then from these last by electric wires 3I to electro-motor.

Fig I4 shows a rim 22 with holes 25 in order to bolt the rim to the car and besides ithe figure shows the uncovered part without tyre where the tyre will be put.

Fig. I5 shows a bicycle with alternators in corporated to the wheels, the axle 3 of the some alternators will be fixed and bolted, from the al ternator comes out the electric wire 5, when the o bicycle is in motion and runs by pedals 37 or ele ctro-motor 30, the alternators $10^2$ will produce electric energy and from these alternators it wil l go by an electric wire 31 tothe rapid generator 28 and from this to the battery 29 and from this last, always by an electric wire 31 to the electro-motor.

Fig. 16 shows a part of a rim cut at the centre we can see the empty space 22 in the in side part of the rim where, the special alternators 10 will be fixed and connected bolts.

Cars and means of trasport with electr-motor and alternators incorporated to wheels or ax les in conformity of the invention have been ju st described with reference to some ways of reali zation preferred by the invention.

It is obvious that they can be utilized for the realization of other means of transport, sepa rately or in combination, with possibility of va riations in proportions, dimensions and disposi-

0051711

tions without going uot of the ambit of the invention.

C L A I M S

1) Cars and means of trasport equipedd with an electro-motor 30 and with alternators incorporated 10 B or connect ed to wheels 10 or axles 34 for the quick and continue recharge of batteries 29 or supplying of electric energy directly to the engine 30, they have shapes of casing of various Kind, wheels with incorporated alternators 10 B or with alternators connected to wheels 10, besides they can be also incorporated or connected to axles 27, or they can have alternators with the basis 17, put on the mean of transport 20, connected by belt or chain 26.

2) Cars and means of transport equipped with an electro-motor 30 and with alternators incorporated $10^B$ or connected to wheels 10 or axles 34 for the quick and continue recharge of batteries 29 or supplyng of electric energy directly to the engine 30, they are characterized fromthe fact that the means of transport have rapid generator 28 of electric energy, to these generators arrives by an electric wire 31 the energy producted by the alternators 10,10 b, 20, 27, this energy then,goes to batteries 29 and from these last always by an electric wire 31, it will go to the electro-motor 30.

3) Cars and means of transport equipped with an electro-motor 30 and with incorporated alternators 10b or alternators connected to wheels 10 or axles 34, in concormity of claims 1 and 2 they are characterized from the fact that the wheels 23 with incorporaïed alternators 10b, are realized like the traditional kinds, but in this case instead of putting the axle with bearings, we put an alternator 10b, to this the spokes 25 are hooked, the spokes will be then hooked and fixed to the rim 35 and to this last the tyre 23 is then rised.

4) Cars and means of transport equipped with an electro-motor 30,and with incorporated alternators 10b or connected to wheels 10 or axles 34, in conformity of claims n. I and n. 2, the alternators I0, connected to wheels by a plate where there are holes and bolts which come autside (o), (to these the wheel is then fixed) have a rotor I which is replaced by a big rolled iron ring $8$ , inside e which, in special splines $2^B$ the isolated circuit of wire or of copper rods is put, while the stator 2 is replaced by an electro-magnet provided with many poles $4^B$ as are necessary for its power.

5) Cars and means of trasport equipped with an electro-motor 30 and with incorporated alternators $10^B$ or  connected to wheels I0 or axles 34 in conformity of claims n. I an n. 2, they are characterized from the fact that the alternators incorporated to wheels $10^B$, have the rotor I replaced by the armature, a big iron rolled ring 8 inside which in special splines $2^B$ the isolated circuit of wire or of copper rods $2^B$ is put while the stator 2 is replaced by an electro-magnet provided with power of t the alternator.

6) Cars and means of transport equipped with an electro-motor 30 and with incorporated alterna tors $10^B$ or connected to wheels or axles 34 in conformity of claims n. I,2,3 and 5 characteri zed from the fact that in the axle 3 of the al ternator of the wheel $10^B$ passes a spline 6 ̇ from the inside to the outside of the alternator so that it can go along under the bearing I9 where the electric wire 5 goes along, this electric wire takes the electric energy from the alternator to the rapid generator 28 and from this last to batteries 29 and then another wire 3I connects the battery to the electr- motor.

7) Cars and means of transport equipped with an electro-motor 30 and with incorporated alterna tors $10^B$ or connected to wheels 10 or axles 34 in conformity of claims I,2,4, the alternators, which must be connected to wheels present, in the inside part, a plate where there are holes and bolts 9 in order to fix the wheel, while in the outsider part we can see the axle 3 whe re there is a spline 6 where the electric wire 5 goes along the all axle, passing under the bearing I9 of the alternator from this wire the alternator makes the electric energy go out.

8) Cars and means of transport equipped with an electro-motor 30 and with incorporated alternators $10^B$ or connected TO wheels I0 or axles 34 in conformity of claims I and 2 these means transport are characterized from the fact that they can be applied with alternators 20 with the basis I7 put on the means of transport (B,F), the alternator is applied with belt or chain 26 which goes along the pulleys of the axle 3 of the alternator or of wheels or of axles 34 of wheels.

9) Cars and means of transport equipped with an electro-motor 30 and with incorporated alternators $10^B$ or connerted to wheels I0 or axles in conformity of claims I and 2, characterized from the fact that the alternators 27 are either connected to axles 34 or incorporated to axle 34.

I0) Cars and means of transport equipped with an electro-motor 30 and with incorporated alter nators I0$^B$ or connected to wheel I0 or axles in conformity of claims I,2,3,4,5,6,7,8 and 9 characterized from the fact that the means of transport can be applied with engines pushed by other energetic force by men by means the pedals 37 of the bicycle or by other means or in conclusion these different engines can be put in addition to the electric one.

II) Cars and means of transport equipped with an electro-motor 30 and with incorpprated 30 and with incorporated alternators I0$^B$ or connected to wheels I0 or axles in conformity of claims n. I,2,3,4,5,6,7,8,9, and I0$^B$ can be a single block like the wheel in the figures8,I4 and I6 where the alternator will be incorporated, therefore without spokes 25.

0051711

Fig.1.

Fig.2.

Fig.3.

Fig.4.

0051711

Fig.5.

Fig.6.

_Fig.7._

_Fig.8._

_Fig.9._

0051711

## Fig. 10.

22b    22b   26   20   22b                22b

## Fig. 11.

23                23

30

32      34        27

27

23    29    29    28   23   31

## Fig. 12.

23      20   26   29   28   23      23

## Fig. 13.

23    32    23    23

30          27          27

23   31  33   34   23  29   28  27  23

0051711

## Fig. 14.

## Fig. 16.

## Fig. 15.

## DOCUMENTS CONSIDERED TO BE RELEVANT

| Category | Citation of document with indication, where appropriate, of relevant passages | Relevant to claim |
|---|---|---|
| | FR - A - 2 258 283 (URIARTE BARRA-GAN)<br>  * Page 2, lines 21-37 * | 1,2 |
| | FR - A - 905 971 (P.F. ALQUIER)<br>  * Page 1, line 52 - page 2, line 20 * | 1,2,9 |
| | FR - A - 509 241 (J.H. HANSEN)<br>  * Page 1, lines 21-32; figure * | 1,2,8 |
| | DE - C - 133 356 (E.R. GILL)<br>  * Page 1, left-hand column, lines 5-16; figures 1-4 * | 3 |
| | FR - A - 2 436 036 (J. RAUD)<br>  * Page 3, line 14 - page 4, line 21; figure 2 * | 10 |
| A | FR - A - 817 146 (L.R. MERVILLE)<br>  * Page 1, lines 18-24 * | 1,2 |
| A | US - A - 3 792 742 (C.J. MAGER)<br>  * Column 1, line 51 - column 2, line 6; figures 2,3 * | 1,3 |

./.

**CLASSIFICATION OF THE APPLICATION (Int. Cl.³)**

B 60 L 11/18
H 02 K 53/00

**TECHNICAL FIELDS SEARCHED (Int. Cl.³)**

H 02 K 53/00
H 02 N 11/00
B 60 L 11/18
B 60 K 25/04
          1/02
H 02 J  7/14
H 02 K 21/24

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 06-07-1981 | WEIHS |

EPO Form 1503.1  06.78

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| A | FR - A - 2 237 349 (P. SOUBITEZ)  * Page 2, line 13 - page 3, line 2; figure * | 5 | |
| | ---- | | |
| | | | TECHNICAL FIELDS SEARCHED (Int. Cl.³) |

EPO Form 1503.2  06.78

-2-